# EUROPÄISCHE PATENTSCHRIFT

(11) **EP 1 323 601 B1**
(45) Veröffentlichungstag und Bekanntmachung des Hinweises auf die Patenterteilung: **17.08.2005**
(21) Anmeldenummer: 02028392.5
(22) Anmeldetag: 18.12.2002
(51) Int. Cl.: B60S 1/40

(54) **Wischarm**
Wiper arm
Bras d'essuie-glace

(30) Priorität: 19.12.2001 DE 10162403
(43) Veröffentlichungstag der Anmeldung: 02.07.2003
(73) Patentinhaber: ROBERT BOSCH GMBH, 70442 Stuttgart (DE)
(72) Erfinder: Op't Roodt, Inigo, B-3500 Hasselt (BE)

(56) Entgegenhaltungen:
- WO-A-00/73113
- US-A- 5 618 124
- PATENT ABSTRACTS OF JAPAN Bd. 010, Nr. 231 (M-506), 12. August 1986 (1986-08-12) -& JP 61 064564 A (NISSAN MOTOR CO LTD), 2. April 1986 (1986-04-02)

## Beschreibung

### Stand der Technik

Die Erfindung geht von einem Wischarm nach dem Oberbegriff des Anspruchs 1 aus.

Bekannte Scheibenwischer weisen einen Wischarm auf, der auf einer Wischerwelle sitzt. Diese wird von einem Wischermotor angetrieben. Der Wischarm weist am freien Ende seiner Wischstange ein hakenförmiges Ende auf, das in einen Einhängekasten eines Mittelbügels eines Wischblatts greift und ein Lagerteil umfasst, in dem schwenkbar ein Gelenkbolzen des Wischblatts gelagert ist. Das Wischblatt besitzt in der Regel ein mehrgliederiges Tragbügelsystem mit dem Mittelbügel, an dem untergeordnete Bügel angelenkt sind, von denen zumindest einige mit Krallen an ihren Enden eine Wischleiste halten.

Es sind auch gelenklose Wischblätter bekannt, die anstelle des Tragbügelsystems ein senkrecht zur Fahrzeugscheibe federndes, elastisches Tragelement besitzen, das aus Kunststoff hergestellt ist. Um die Federeigenschaft zu verbessern, kann es mindestens eine Federschiene aus Federstahl aufweisen. Das Tragelement besitzt im unbelasteten Zustand eine stärkere Krümmung als die Fahrzeugscheibe, so dass sich die Wischleiste unter der Anpresskraft des Wischarms mit einer geeigneten Druckverteilung an die Fahrzeugscheibe anlegt.

Gelenklose Wischblätter bauen sehr niedrig, was bezüglich ihres strömungstechnischen Verhaltens und der Geräuschentwicklung im Fahrtwind sehr günstig ist. Aus der DE 199 24 662 A1 ist ein Scheibenwischer mit einem gelenklosen Wischblatt bekannt, das über ein so genanntes "Sidelock-System" an einem Wischarm angelenkt ist. Hierzu ist ein Stift an dem freien Ende des Wischarms, der ein zur Fahrzeugscheibe hin offenes, u-förmiges Profil aufweist, seitlich und quer zu dessen Längsrichtung und zu dem Wischblatt zeigend vernietet. Der Stift ist in einer Lagerbohrung eines Verbindungsteils schwenkbar gelagert, welches fest mit dem Tragelement des Wischblatts verbunden ist.

Parallel zum Stift ist am Wischarm in Längsrichtung versetzt eine Brücke angeordnet, die an ihrem freien Ende zur Seite des Stifts hin abgewinkelt ist. In einer Montageposition, in der das Wischblatt quer zur Längsrichtung des Wischarms gehalten wird, kann der Stift in die Lagerbohrung des Verbindungsteils geschoben werden. Wird das Wischblatt anschließend parallel zur Längsrichtung des Wischarms gedreht, übergreift die Brücke das Wischblatt und verriegelt es mit ihrem abgewinkelten Ende, so dass das Wischblatt im montierten Zustand auf dem Stift zwischen dem abgewinkelten Ende der Brücke und dem Wischarm geführt ist. Die Brücke taucht in der Betriebsstellung des Wischblatts in eine entsprechende Nut des Verbindungsteils ein und schließt etwa bündig mit der Oberseite des Verbindungsteils ab. Zur Demontage muss das Wischblatt in die entgegengesetzte Richtung geschwenkt werden, bis das abgewinkelte Ende außer Eingriff gebracht ist und das Wischblatt vom Stift gezogen werden kann.

Des Weiteren zeigt das Dokument US-A-5 618 124 einen Wischarm mit einem seitlichen, zu einem Wischblatt zeigenden Stift, der als Befestigungsmittel zur Befestigung des Wischblattes dient. Der Stift ist an einem Adapter angeordnet, der in ein hakenförmiges Ende des Wischarms mittels einer Klippverbindung eingesetzt.

### Vorteile der Erfindung

Nach der Erfindung hat die Wischstange des Wischarms ein hakenförmiges Ende, wie es allgemein üblich ist, jedoch nicht für Sidelock-Systeme verwendet wird. Damit solche weit verbreiteten Wischarme auch für Wischblätter geeignet sind, die mit einem Sidelock-System gelenkig mit dem Wischarm verbunden werden, ist in das hakenförmige Ende ein quer zum Stift geteilter Adapter eingesetzt, mit dem der Stift verbunden ist. Die Adapterteile besitzen nach innen weisende Passstücke, an die sich nach außen Flansche anschließen, die seitlich am hakenförmigen Ende anliegen. Die Adapterteile werden bei der Montage vorzugsweise lösbar miteinander verbunden und in Längsrichtung am hakenförmigen Ende fixiert. Die Brücke ist mit einem der Adapterteile fest verbunden.

Durch den in das hakenförmige Ende der Wischstange eingesetzte Adapter erfüllt der erfindungsgemäße Wischarm alle Anforderungen für ein Sidelock-System. Er kann mit wenigen Handgriffen umgerüstet werden, so dass er sowohl für übliche Wischblätter mit einem Tragbügelsystem als auch für gelenklose Wischblätter geeignet ist, die in der Regel eine Verbindung nach dem Sidelock-System erfordern, um die Vorteile einer geringen Bauhöhe nutzen zu können. Ein weiterer Vorteil besteht darin, dass die Form und die Abmessung des gelenklosen Wischblatts und des Wischarms mit dem hakenförmigen Ende erhalten bleiben und keine konstruktiven Veränderungen bzw. neue Werkzeuge zum Fertigen dieser Bauteile notwendig sind.

Die Adapterteile können durch jede geeignete Verbindungstechnik, z.B. durch Kleben, Klippsen oder Nieten, miteinander verbunden werden. Eine zuverlässige und leicht lösbare Verbindung erreicht man durch eine Schraube, so dass der montierte Adapter jederzeit wieder entfernt und etwa ein Wischblatt mit einem Tragbügelsystem angelenkt werden kann.

Die Schraube, die zweckmäßigerweise eine Senkschraube ist, wird durch ein Schraubenloch des einen Adapterteils gesteckt und in ein Gewindeloch des anderen Adapterteils eingeschraubt. Vor dem Zusammenschrauben werden die Adapterteile zweckmäßigerweise durch Zentriermittel, z.B. eine Fügenut und eine entsprechende Passfeder an den Passstücken, gegeneinander zentriert. Beim Anzug der Schraube werden die Flansche gegen die Seiten des hakenförmigen Endes verspannt und in axialer Richtung in vorteilhafter. Weise durch einen Nocken gesichert, der an einem Flansch angeformt ist und sich außen zumindest teilweise über den gebogenen Teil des hakenförmigen Endes erstreckt. Zum Sichern können auch Rastmittel verwendet werden, z.B. Rastnasen, die in Rastvertiefungen des Gegenstücks eingreifen.

Um den Stift mit der Wischstange zu verbinden, besitzt eines der Adapterteile ein Stiftloch, das zweckmäßigerweise als eine gestufte Sackbohrung ausgebildet ist. In dieses Stiftloch wird der Stift mit einem Ende eingesetzt, bis ein Bund, der an diesem Ende des Stifts vorgesehen ist, an einer Anlagefläche des abgesetzten Stiftlochs anliegt. Im anderen Adapterteil ist eine Passbohrung vorgesehen, die vom anderen Ende über den Stift gepresst wird, bis eine entsprechende Anlagefläche an dem Bund des Stifts anliegt. Somit ist der Stift nach der Montage des Adapterteils spielfrei im Adapter gehalten, der wiederum über seine Passstücke spielfrei im hakenförmigen Ende der Wischstange befestigt ist. Grundsätzlich kann das Stiftloch wie die Passbohrung mit einer Presspassung dimensioniert werden. Wird jedoch nur die Passbohrung mit einer Presspassung versehen, ist es wegen der Abstützverhältnisse günstig, wenn die Passbohrung in dem Adapterteil vorgesehen wird, das dem Wischblatt zugewandt ist. An diesem Adapterteil wird auch zweckmäßigerweise die Brücke mit ihrem abgewinkelten Ende angeformt.

Grundsätzlich können die Adapterteile mit der angeformten Brücke, der Stift und die Schraube aus Kunststoff hergestellt werden. Aus Festigkeitsgründen kann es jedoch zweckmäßig sein, den Stift und die Schraube aus Metall zu fertigen, wobei die Adapterteile aus Kunststoff die Metallteile gegeneinander isolieren, und zwar den Stift und die Schraube einerseits und die Wischstange andererseits.

### Zeichnung

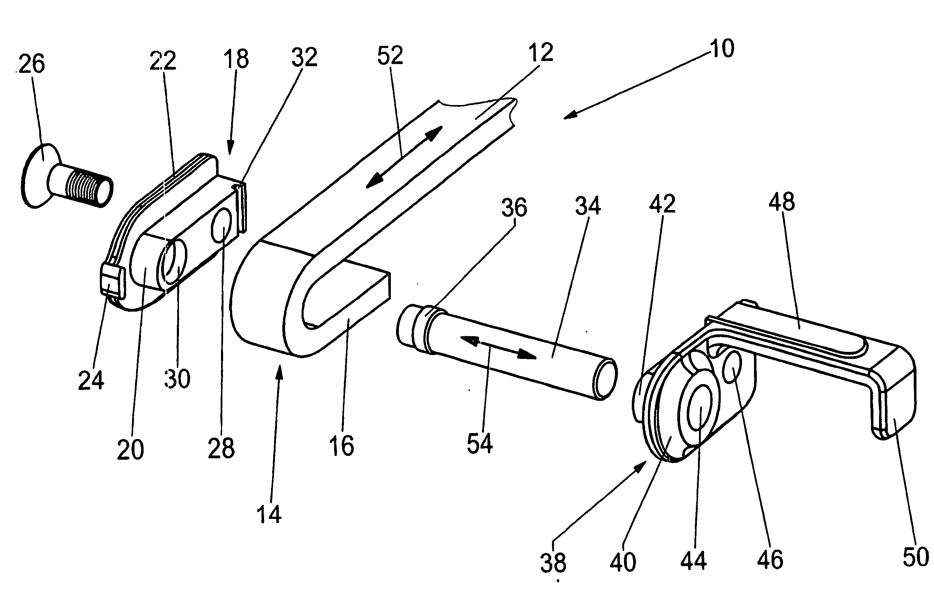

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination.

Der Fachmann wird die Merkmale zweckmäßigerweise auch einzeln betrachten und zu sinnvollen weiteren Kombinationen zusammenfassen.

Die einzige Zeichnung zeigt eine Explosionszeichnung eines Endes eines Wischarms.

### Beschreibung des Ausführungsbeispiels

Ein Wischarm 10 besitzt eine Wischstange 12, deren Ende um 180° abgewinkelt ist und ein hakenförmiges Endes 14 bildet, dessen unterer Schenkel mit 16 bezeichnet ist. In das hakenförmige Ende 14 kann ein Adapter 18, 38 eingesetzt werden, der in Längsrichtung 52 des Wischarms 10 geteilt ist und aus einem ersten Adapterteil 18 sowie einem zweiten Adapterteil 38 besteht. Die Adapterteile 18 und 38 werden seitlich montiert und lösbar miteinander verbunden.

Die Adapterteile 18, 38 besitzen nach innen weisende Passstücke 20, 42 die im Umfang dem Inneren des hakenförmigen Endes 14 angepasst sind. Im montierten Zustand liegen die Passstück 20, 42 stirnseitig aneinander und werden durch eine Schraube 26 zusammengehalten, die durch ein in axialer Richtung 54 verlaufendes Schraubenloch 28 im ersten Adapterteil 18 geführt und in ein Gewindeloch 46 des zweiten Adapterteils 38 geschraubt ist. Dabei liegen die Adapterteile 18, 38 mit Flansche 22, 40, die sich an die Passstücke 20, 42 anschließen, außen an den Seitenflächen der Wischstange 12 an und erhalten durch die Schraube 26 eine Vorspannung, so dass eine spielfreie Verbindung hergestellt wird.

Eine am Passstück 42 angeformte Feder greift in eine Fügenut 32 am Passstück 20 ein, wodurch die Ausrichtung der Adapterteile 18, 38 zueinander erleichtert wird. Als Sicherung in Längsrichtung 52 ist am Flansch 22 ein Nocken 24 angeordnet, der sich zumindest teilweise über die Außenkontur des gebogenen Bereichs des hakenförmigen Endes 14 erstreckt. Alternativ kann der Adapter 18, 38 auch durch Rastnasen in Längsrichtung 52 gesichert werden, die in entsprechende Ausnehmungen am unteren Schenkel 16 des hakenförmigen Endes 14 eingreifen.

Die Passstücke 20 und 42 halten einen Stift 34, der quer zur Teilungsebene des Adapters 18, 38 angeordnet ist und als Aufnahme für ein nicht dargestelltes Wischblatt dient. Der Stift 34 sitzt mit einer Presspassung spielfrei in einer Passbohrung 44 des Passstücks 42, die in axialer Richtung 54 verläuft, wobei ein an einem Ende des Stifts 34 angeformter Bund 36 einen stirnseitigen Anschlag bildet. Der Bund 36 weist zum Passstück 20 und wird dort in ein gestuftes Stiftloch 30 eingesetzt, das zweckmäßigerweise als Sackloch ausgebildet ist. Er wird zwischen zwei entsprechenden Anlageflächen der Passstücke 20, 42 axial fixiert. Alternativ kann er auch in das Passstück 42 oder teilweise in beide Passstücke 20, 42 eingelassen sein. Ferner kann auch das Stiftloch 30 eine Presspassung aufweisen, wodurch der Halt des Stifts 34 verbessert wird.

Zum Verriegeln eines auf dem Stift 34 gelagerten Wischblatts, weist das zweite Adapterteil 38 eine Brücke 48 auf. Diese ist parallel zum Stift 34 und in Längsrichtung 52 versetzt angeordnet und weist ein abgewinkeltes Ende 50 auf. Zweckmäßigerweise ist sie fest mit dem zweiten Adapterteil 38 verbunden, indem sie ein integraler Bestandteil des Adapterteils 38 ist.

### Bezugszeichen

- 10: Wischarm
- 12: Wischstange
- 14: hakenförmiges Ende
- 16: unterer Schenkel
- 18: erstes Adapterteil
- 20: Passstück
- 22: Flansch
- 24: Nocken
- 26: Senkschraube
- 28: Schraubenloch
- 30: Stiftloch
- 32: Fügenut
- 34: Stift
- 36: Bund
- 38: zweites Adapterteil
- 40: Flansch
- 42: Passstück
- 44: Passbohrung
- 46: Gewindeloch
- 48: Brücke
- 50: abgewinkeltes Ende
- 52: Längsrichtung
- 54: axiale Richtung

## Patentansprüche

1. Wischarm (10) mit einer Wischstange (12), die an ihrem freiem Ende seitlich, quer zur Längsrichtung (52) und zu einem Wischblatt zeigend einen Stift (34) besitzt, zu dem parallel und in Längsrichtung (52) des Wischarms (10) versetzt eine Brücke (48) angeordnet ist, die mit einem abgewinkelten Ende (50) den Stift (34) in axialer Richtung überragt, **dadurch gekennzeichnet, dass** die Wischstange (12) des Wischarms (10) ein hakenförmiges Ende (14) hat, in das ein quer zum Stift (34) geteilter Adapter (18, 38) eingesetzt ist, mit dem der Stift (34) verbunden ist und dessen Adapterteile (18, 38) nach innen weisende Passstücke (20, 42) besitzen, an die sich nach außen Flansche (22, 40) anschließen, die seitlich am hakenförmigen Ende (14) anliegen, wobei die Adapterteile (18, 38) lösbar miteinander verbunden sowie in Längsrichtung (52) am hakenförmigen Ende (14) fixiert sind und die Brücke (48) mit einem der Adapterteile (18, 38) fest verbunden ist.

2. Wischarm (10) nach Anspruch 1, **dadurch gekennzeichnet, dass** ein erstes Adapterteil (18) ein in axialer Richtung (54) weisendes Schraubenloch (28) für eine Schraube (26) hat, die in ein Gewindeloch (46) des zweiten Adapterteils (38) eingreift.

3. Wischarm (10) nach einem der vorhergehenden Ansprüche, **dadurch gekennzeichnet, dass** der Stift (34) an einem Ende einen Bund (36) aufweist, der in ein Stiftloch (30) eines der Adapterteile (18) eingesetzt ist und zwischen zwei Anlageflächen axial in den Adapterteilen (18, 38) gehalten wird, während er mit einer Presspassung in einer Passbohrung (44) mindestens eines der Adapterteile (18, 38) fest sitzt.

4. Wischarm (10) nach einem der vorhergehenden Ansprüche, **dadurch gekennzeichnet, dass** die Passbohrung (44) in dem Adapterteil (38) angeordnet ist, das dem Wischblatt zugewandt ist.

5. Wischarm (10) nach einem der vorhergehenden Ansprüche, **dadurch gekennzeichnet, dass** eines der Adapterteile (18, 38) an seinem Flansch (22, 40) einen Nocken (24) besitzt, der sich außen über den gebogenen Teil des hakenförmigen Endes (14) erstreckt.

6. Wischarm (10) nach einem der vorhergehenden Ansprüche, **dadurch gekennzeichnet, dass** eines der Adapterteile (18, 38) an seinem Passstück (20, 42) eine Fügenut (32) aufweist, in die eine Feder des anderen Passstücks (20, 42) eingreift.

7. Wischarm (10) nach einem der vorhergehenden Ansprüche, **dadurch gekennzeichnet, dass** mindestens eines der Adapterteile (18, 38) und/oder der Stift (34) aus Kunststoff besteht.

## Claims

1. Wiper arm (10) having a wiper rod (12) which, at its free end, has, laterally, pointing transversely with respect to the longitudinal direction (52) and to a wiper blade, a pin (34), parallel to which and offset in the longitudinal direction (52) of the wiper arm (10) is arranged a bridge (48) which protrudes with an angled end (50) over the pin (34) in the axial direction, **characterized in that** the wiper rod (12) of the wiper arm (10) has a hook-shaped end (14) into which is inserted an adapter (18, 38), which is divided transversely with respect to the pin (34) and to which the pin (34) is connected and the adapter parts (18, 38) of which have inwardly facing fitting pieces (20, 42) which are outwardly adjoined by flanges (22, 40) which bear laterally against the hook-shaped end (14), the adapter parts (18, 38) being connected releasably to each other and being fixed to the hook-shaped end (14) in the longitudinal direction (52) and the bridge (48) being connected fixedly to one of the adapter parts (18, 38).

2. Wiper arm (10) according to Claim 1, **characterized in that** a first adapter part (18) has a screw hole (28), which faces in the axial direction (54), for a screw (26) which engages in a threaded hole (46) of the second adapter part (38).

3. Wiper arm (10) according to one of the preceding claims, **characterized in that** the pin (34) has, at one end, a collar (36) which is inserted into a pin hole (30) of one of the adapter parts (18) and is held axially between two bearing surfaces in the adapter parts (18, 38) while it sits firmly with a press fit in a fitting bore (44) of at least one of the adapter parts (18, 38).

4. Wiper arm (10) according to one of the preceding claims, **characterized in that** the fitting bore (44) is arranged in the adapter part (38) which faces the wiper blade.

5. Wiper arm (10) according to one of the preceding claims, **characterized in that** one of the adapter parts (18, 38) has, on its flange (22, 40), a cam (24) which extends outwards over the bent part of the hook-shaped end (14).

6. Wiper arm (10) according to one of the preceding claims, **characterized in that** one of the adapter parts (18, 38) has, on its fitting piece (20, 42), a joining groove (32) in which a spring of the other fitting piece (20, 42) engages.

7. Wiper arm (10) according to one of the preceding claims, **characterized in that** at least one of the adapter parts (18, 38) and/or the pin (34) consists of plastic.

## Revendications

1. Bras d'essuie-glace (10) muni d'une tringle d'essuie-glace (12) qui possède un doigt (34) disposé latéralement à son extrémité libre, transversalement à la direction longitudinale (52), qui pointe vers un balai d'essuie-glace et sur lequel est disposé, parallèlement au bras d'essuie-glace (10) et déporté dans la direction longitudinale (52), un pont (48) dont une extrémité coudée (50) déborde au-delà du doigt (34) dans la direction axiale,
**caractérisé en ce que**
la tringle (12) du bras d'essuie-glace (10) possède une extrémité en forme de crochet (14) dans laquelle est inséré un adaptateur (18, 38) divisé transversalement au doigt (34), auquel le doigt (34) est relié et dont les parties (18, 38) possèdent des pièces ajustées (20, 42) dirigées vers l'intérieur, auxquelles font suite vers l'extérieur des flasques (22, 40) qui s'appuient latéralement contre l'extrémité en forme de crochet (14), les parties (18, 38) de l'adaptateur étant assemblées l'une à l'autre ainsi que bloquées dans la direction axiale (52) contre l'extrémité en forme de crochet (14) de façon démontable et le pontet (48) étant relié rigidement à l'une des parties (18, 38) de l'adaptateur.

2. Bras d'essuie-glace (10) selon la revendication 1,
**caractérisé en ce qu'**
une première partie (18) de l'adaptateur possède un trou de vis (28) orienté dans la direction axiale (54), pour une vis (26) qui entre en prise dans un trou fileté (46) de la seconde partie (38) de l'adaptateur.

3. Bras d'essuie-glace (10) selon une des revendications précédentes,
**caractérisé en ce que**
le doigt (34) présente à une extrémité une embase (36) qui est emboîtée dans un trou de doigt (30) de l'une (18) des parties de l'adaptateur et est retenue axialement dans les parties (18, 38) de l'adaptateur entre deux surfaces de contact, tandis qu'il est monté rigidement, par un ajustement à serrage, dans un perçage ajusté (44) d'au moins une des parties (18, 38) de l'adaptateur.

4. Bras d'essuie-glace (10) selon une des revendications précédentes,
**caractérisé en ce que**
le perçage ajusté (44) est prévu dans la partie (38) de l'adaptateur qui est dirigée vers le balai d'essuie-glace.

5. Bras d'essuie-glace (10) selon une des revendications précédentes,
**caractérisé en ce que**
une des parties (18, 38) de l'adaptateur possède sur son flasque (22, 40) un bossage (24) qui se prolonge vers l'extérieur au-delà de la partie recourbée de l'extrémité en forme de crochet (14).

6. Bras d'essuie-glace (10) selon une des revendications précédentes,
**caractérisé en ce qu'**
une des parties (18, 38) de l'adaptateur présente sur sa pièce ajustée (20, 42) une rainure formant emboîture (32) dans laquelle est engagée une languette de l'autre pièce ajustée (20, 42).

7. Bras d'essuie-glace (10) selon une des revendications précédentes,
**caractérisé en ce qu'**
au moins une des parties de l'adaptateur (18, 38) et/ou le doigt (34) est ou sont en matière plastique.
